(19) Europäisches Patentamt
European Patent Office
Office européen des brevets

(11) **EP 3 863 899 B1**

(12) **EUROPÄISCHE PATENTSCHRIFT**

(45) Veröffentlichungstag und Bekanntmachung des Hinweises auf die Patenterteilung:
**16.08.2023   Patentblatt 2023/33**

(21) Anmeldenummer: **19782937.7**

(22) Anmeldetag: **25.09.2019**

(51) Internationale Patentklassifikation (IPC):
*B60T 8/1766* (2006.01)          *B60L 7/18* (2006.01)
*B60T 1/10* (2006.01)          *B60W 30/18* (2012.01)

(52) Gemeinsame Patentklassifikation (CPC):
**B60T 8/1766; B60L 7/18; B60L 7/26;**
**B60L 15/2009; B60L 15/2045; B60T 1/10;**
**B60W 30/18127;** B60T 2270/604; B60T 2270/608;
Y02T 10/64; Y02T 10/72

(86) Internationale Anmeldenummer:
**PCT/EP2019/075866**

(87) Internationale Veröffentlichungsnummer:
**WO 2020/074259 (16.04.2020 Gazette 2020/16)**

(54) **VERFAHREN ZUR VERTEILUNG EINES VON EINEM FAHRER ANGEFORDERTEN BREMSMOMENTS AUF DIE ACHSEN EINES KRAFTFAHRZEUGS**

METHOD FOR DISTRIBUTING A BRAKING TORQUE, REQUESTED BY A DRIVER, OVER THE AXLES OF A MOTOR VEHICLE

PROCÉDÉ PERMETTANT DE RÉPARTIR SUR LES ESSIEUX D'UN VÉHICULE AUTOMOBILE UN COUPLE DE FREINAGE VOULU PAR UN CONDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2018   DE 102018217224**

(43) Veröffentlichungstag der Anmeldung:
**18.08.2021   Patentblatt 2021/33**

(73) Patentinhaber: **Audi AG**
**85045 Ingolstadt (DE)**

(72) Erfinder: **GEUß, Matthias**
**96149 Breitengüßbach (DE)**

(56) Entgegenhaltungen:
WO-A1-2006/076999          WO-A1-2012/041731
WO-A1-2013/045584          WO-A1-2017/042209
DE-A1-102013 209 175          DE-A1-102016 003 628

**Beschreibung**

Die Erfindung betrifft ein Verfahren zur Verteilung eines von einem Fahrer angeforderten Bremsmoments auf die Achsen eines Kraftfahrzeugs, insbesondere eines Elektrofahrzeugs, gemäß der im Oberbegriff des Patentanspruches 1 angegebenen Art.

Blendingfähige Bremssysteme, die ein vom Fahrer, z.B. über Bremspedal oder Fahrpedal (One-Paddle Verhalten) angefordertes Bremsmoment in ein von einer Reibungsbremse zu erzeugenden Reibbremsmomentanteil und einen von einer elektrischen Maschine zu Verfügung zu stellenden Rekuperationsmomentanteil aufteilen, sowie entsprechende Verfahren zur Verteilung des angeforderten Bremsmoments auf die Achsen eines Kraftfahrzeugs sind hinreichend bekannt. Bekanntlich kann dabei die Verteilung des Reibbremsmoments auf die Achsen skalar, d.h. die Verteilung des Reibbremsmoments auf die Vorder- und Hinterachse ist hydraulisch fest vorgegeben, wie z.B. 60%/40%, oder achsindividuell, d.h. die Verteilung auf die Vorder- und Hinterachse kann im Betrieb variabel verändert werden, erfolgen. Lediglich beispielhaft wird auf die DE 10 2015 106 746 A1 und DE 10 2016 003 628 A1 verwiesen. Die DE 10 2016 003 628 A1 zeichnet sich insbesondere dadurch aus, dass an jeder Achse mindestens eine elektrische Maschine zugeordnet ist, so dass für beide Achsen ein "gemischtes", d.h. einen Reibbremsmomentanteil und einen Rekuperationsmomentanteil aufweisendes, Bremsmoment zur Verfügung steht.

Ein gattungsgemäßes, sämtliche Merkmale des Oberbegriffes des Patentanspruches 1 aufweisendes Verfahren zur Verteilung eines von einem Fahrer angeforderten Bremsmoments auf die Achsen eines Kraftfahrzeugs ist aus der WO 2017/0422209 A1 bekannt.

Der Erfindung liegt die Aufgabe zu Grunde ein Verfahren zur Verteilung eines von einem Fahrer angeforderten Bremsmoments auf die Achsen eines Kraftfahrzeugs anzugeben, welches eine möglichst hohe Bremsenergie-Rückgewinnung ermöglicht und sich damit durch eine hohe Effizienz auszeichnet.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen des erfindungsgemäßen Verfahrens.

In bekannter Art und Weise ist der ersten Achse eine Reibbremsvorrichtung, nachfolgend als erste Reibbremsvorrichtung bezeichnet, und eine elektrische Maschine zugeordnet. Die der ersten Achse zugeordnete elektrische Maschine ist nachfolgend auch als erste elektrische Maschine und deren Wirkungsgrad als erster Wirkungsgrad bezeichnet. Entsprechend sind auch der zweiten Achse eine zweite Reibbremsvorrichtung und eine einen zweiten Wirkungsgrad aufweisende zweite elektrische Maschine zugeordnet.

Es ist ferner in bekannter Art und Weise vorgesehen, dass die Aufteilung eines von einem Fahrer angeforderten Bremsmoments auf die erste und/oder zweite Achse sowie die Bestimmung der Anteile der von der ersten und/oder zweiten elektrischen Maschine zur Verfügung zu stellenden Rekuperationsmomente am angeforderten Bremsmoment unter Berücksichtigung der aktuellen Fahrstabilität des Kraftfahrzeugs durchgeführt wird.

Da gemäß dem Verfahren die Aufteilung und die Anteile der von der ersten und/oder zweiten elektrischen Maschine zu stellenden Rekuperationsmomente unter Berücksichtigung der aktuellen Fahrstabilität des Kraftfahrzeugs erfolgt, d.h. dass in Abhängigkeit von der aktuellen Fahrstabilität bestimmt wird, ob ein Rekuperationsmoment zu stellen ist bzw. wie groß ein zu stellendes Rekuperationsmoment sein soll, ist sichergestellt, dass über einen größeren Fahr-/Stabilitätsbereich des Kraftfahrzeugs eine Bremsenergie-Rückgewinnung durchführt werden kann, mit der Konsequenz, dass eine hohe Effizienz gewährleistet ist.

Die Bestimmung der aktuellen Fahrstabilität erfolgt dabei vorzugsweise unter Nutzung von in heutigen Kraftfahrzeugen standardmäßig vorhanden Sensoren und einer entsprechenden Auswertung der von diesen Sensoren zur Verfügung gestellten Daten, wie z.B. Beschleunigung, Raddrehzahl, Gieren, Wanken, Nicken, Querbeschleunigung und/oder GPS-Daten.

Für den Fall einer unkritischen Fahrstabilität wird die Aufteilung des Bremsmoments und die Bestimmung der Anteile der von der ersten und/oder zweiten elektrischen Maschine zur Verfügung zu stellenden Rekuperations-momente gemäß einem ersten, im Sinne der elektrischen Maschinen wirkungsgrad- und/oder komfortoptimierten Verfahrensablauf durchgeführt.

Liegt hingegen eine drohende Fahrinstabilität des Kraftfahrzeugs vor, so wird die Aufteilung des Bremsmoments und die Bestimmung der Anteile der von der ersten und/oder zweiten elektrischen Maschine zur Verfügung zu stellenden Rekuperationsmomente gemäß einem zweiten, vorzugsweise im Sinne der Fahrdynamik optimierten Verfahrensablauf durchgeführt. Drohende Fahrinstabilität insbesondere so zu verstehen, dass diese für den Fahrer noch nicht zu spüren ist, d.h. z.B. an den Reifen liegt ein leichter Schlupf vor oder es gibt eine leichte Gierratenabweichung.

Befindet sich das Kraftfahrzeug in einer kritischen Fahrsituation, d.h. eine Fahrinstabilität liegt vor, wird die Aufteilung des Bremsmoments und die Bestimmung der Anteile der von der ersten und/oder zweiten elektrischen Maschine zur Verfügung zu stellenden Rekuperationsmomente gemäß einem dritten, im Sinne der Fahrdynamik stabilen und damit sicheren Verfahrensablauf durchgeführt.

Das Kriterium kritische Fahrsituation bzw. es liegt eine Fahrinstabilität vor, bedeutet, dass die daraus resultierenden Auswirkung für Fahrer zu spüren ist, d.h. das sich an den Rädern ein großer Schlupf bildet bzw. das eine große Gierratenabweichung vorliegt.

Lediglich der Vollständigkeit halber wird noch darauf hingewiesen, dass die drei Bereiche sich aneinander anschließen oder auch in Übergangsbereichen sich überlappen können. Die Verteilung können schnell oder langsam gewechselt werde.

Die Erfindung zeichnet sich dadurch aus, dass gemäß dem ersten Verfahrensablauf vorgesehen ist, dass die Aufteilung des angeforderten Bremsmoments auf die erste und zweite Achse in Abhängigkeit von den Wirkungsgraden der elektrischen Maschinen durchgeführt wird. Hierzu wird zunächst die elektrische Maschine mit dem besseren Wirkungsgrad und anschließend - sofern das von dieser elektrischen Maschine maximal zur Verfügung stellbare Rekuperationsmoment nicht ausreichend ist - die andere elektrische Maschine für die Stellung des angeforderten Bremsmoments ausgeschöpft. Hierdurch ist in vorteilhafter Weise eine maximale Ausschöpfung der Generatormomente gewährleistet. Neben dieser wirkungsgradoptimierten Verteilung ist auch eine komfortoptimierte Verteilung, z.B. zur Schwingungsreduktion, oder auch eine gemischte, d.h. wirkungsgrad-/komfortoptimierte Verteilung denkbar.

Dabei wird - wenn das von der ersten elektrischen Maschine zur Verfügung stellbare erste Rekuperationsmoment und/oder das von der zweiten elektrischen Maschine zur Verfügung stellbare zweite Rekuperationsmoment ausreichend ist, das angeforderte Bremsmoment abzudecken - das angeforderte Bremsmoment vollständig von der ersten und/oder zweiten elektrischen Maschine abgedeckt. D.h., ein zusätzliches Reibmoment ist nicht erforderlich.

Für den Fall, dass ein zusätzliches Reibmoment erforderlich ist, d.h. wenn das von der ersten elektrischen Maschine zur Verfügung stellbare Rekuperationsmoment und das von der zweiten elektrischen Maschine zur Verfügung stellbare Rekuperationsmoment nicht ausreichend sind, das angeforderte Bremsmoment abzudecken, wird ein verbleibendes Restreibmoment bestimmt, wobei dann das angeforderte Bremsmoment von der ersten und zweiten elektrischen Maschine sowie der ersten und/oder zweiten Reibbremsvorrichtung aufgebracht wird.

Vorzugsweise wird dabei das verbleibende Restreibmoment gemäß einer skalaren Verteilung, d.h. die Verteilung auf die erste und zweite Achse ist vorgegeben, oder alternativ gemäß einer achsindividuellen Verteilung in ein mittels der ersten Reibbremsvorrichtung an der ersten Achse aufzubringendes erstes Reibmoment und ein mittels der zweiten Reibbremsvorrichtung an der zweiten Achse aufzubringendes zweites Reibmoment aufgeteilt.

Für den Fall einer drohende Fahrinstabilität des Kraftfahrzeugs ist erfindungsgemäß vorgesehen, dass gemäß dem zweiten Verfahrensablauf das angeforderte Bremsmoment mittels einer stabilen Verteilung in ein an der ersten Achse aufzubringendes erstes Bremsmoment und ein an der zweiten Achse aufzubringendes zweites Bremsmoment aufgeteilt wird. Stabile Verteilung ist dabei als eine im Sinne der Fahrdynamik stabile Verteilung, d.h. eine insbesondere vorderachslastige Verteilung, wie z.B. 70% Vorderachse, 30% Hinterachse, zu verstehen.

Die stabile Verteilung kann dabei fest hinterlegt sein oder auch als eine während der Fahrt flexibel einstellbare stabile Verteilung ausgebildet sein.

Dabei ist erfindungsgemäß vorgesehen, dass das erste Bremsmoment zwingend einen über die erste elektrische Maschine zu stellenden ersten Rekuperationsmomentanteil und das zweite Bremsmoment zwingend einen über die zweite elektrische Maschine zu stellenden zweiten Rekuperationsmomentanteil aufweist. Somit ist in vorteilhafter Weise gewährleistet, dass ausgehend von der wirkungsgradoptimierten Verteilung und Feststellung, dass eine Fahrinstabilität droht, die Bremsverteilung von der wirkungsgradoptimierten Verteilung zunächst zu einer - wenn auch wirkungsgradschlechteren - stabilen Verteilung geändert wird. Da dabei erfindungsgemäß zwingend die beiden elektrischen Maschinen jeweils einen Anteil am Bremsmoment zu Verfügung stellen, ist eine Bremsenergie-Rückgewinnung sichergestellt.

Um auch in diesem Fall eine maximale Bremsenergie-Rückgewinnung zu ermöglichen, wird - wenn das von der ersten elektrischen Maschine zur Verfügung stellbare erste Rekuperationsmoment ausreichend ist, das erste Bremsmoment, und das von der zweiten elektrischen Maschine zur Verfügung stellbare zweite Rekuperationsmoment ausreichend ist, das zweite Bremsmoment abzudecken - das erste Bremsmoment ausschließlich durch den ersten Rekuperationsmomentanteil und das zweite Bremsmoment ausschließlich durch den zweiten Rekuperationsmomentanteil gebildet. Somit wird das angeforderte Bremsmoment vollständig, d.h. ausschließlich, von der ersten und zweiten elektrischen Maschine aufgebracht.

Für den Fall, dass das von der ersten elektrischen Maschine zur Verfügung stellbare Rekuperationsmoment nicht ausreichend ist das erste Bremsmoment und/oder das von der zweiten elektrischen Maschine zur Verfügung stellbare Rekuperationsmoment nicht ausreichend ist das zweite Bremsmoment abzudecken, umfasst das erste Bremsmoment einen zusätzlichen ersten Reibungsmomentanteil und/oder das zweite Bremsmoment einen zusätzlichen zweiten Reibungsmomentanteil, so dass das angeforderte Bremsmoment von der ersten und zweiten elektrischen Maschine sowie der ersten und/oder zweiten Reibbremsvorrichtung aufgebracht wird.

Sind nun für die Stellung des angeforderten Bremsmoments zusätzliche Reibmomente erforderlich, so werden diese gemäß einer Ausführungsform des erfindungsgemäßen Verfahrens gemäß einer skalaren Verteilung, d.h. die Verteilung auf die erste und zweite Achse ist vorgegeben, aufgeteilt. Hierzu wird aus dem Restreibmoment gemäß der stabilen Verteilung ein mittels der ersten Reibbremsvorrichtung an der ersten Achse aufzubringender erster Reibungsmomentanteil und ein mittels der zweiten Reibbremsvorrichtung an der zweiten Achse aufzubringender zweiter Reibungsmomentanteil bestimmt. Anschließend wird unter Berücksichtigung des ersten und zweiten Reibmomentanteils sowie der stabilen Verteilung ein erster und zweiter Rekuperationsmomentanteil bestimmt. Somit wird das angeforderte Bremsmoment von der ersten und zweiten elektrischen Maschine sowie der ersten und zweiten Reibbremsvorrichtung aufgebracht.

Eine alternative Ausführungsform sieht eine achsindividuelle Verteilung der für die Stellung des angeforderten Bremsmoments erforderlichen zusätzlichen Reibmomente vor. D.h., dass das Restreibmoment gemäß einer achsindividuellen Verteilung in ein mittels der ersten Reibbremsvorrichtung an der ersten Achse aufzubringenden ersten Reibungsmomentanteil und/oder ein mittels der zweiten Reibbremsvorrichtung an der zweiten Achse aufzubringenden zweiten Reibungsmomentanteil aufgeteilt wird. Somit wird das angeforderte Bremsmoment von der ersten und zweiten elektrischen Maschine sowie der ersten und/oder zweiten Reibbremsvorrichtung aufgebracht.

Befindet sich das Kraftfahrzeug in einer kritischen Fahrsituation, d.h. eine Fahrinstabilität ist bereits eingetreten, ist erfindungsgemäß vorgesehen, dass gemäß dem dritten Verfahrensablauf das angeforderte Bremsmoment mittels einer stabilen Verteilung in ein an der ersten Achse aufzubringendes erstes Bremsmoment und ein an der zweiten Achse aufzubringendes zweites Bremsmoment aufgeteilt wird, wobei das erste Bremsmoment zwingend einen über die erste Reibbremsvorrichtung aufzubringenden ersten Reibmomentanteil und/oder das zweite Bremsmoment zwingend einen über die zweite Reibbremsvorrichtung aufzubringenden zweiten Reibmomentanteil aufweist.

Hierdurch ist in vorteilhafter Weise sichergestellt, dass an mindestens einer Achse ein Reibbremsmoment vorhanden ist, sodass ein Arbeiten und Eingreifen des ABS-Systems an mindestens einer Achse sichergestellt ist.

Lediglich der Vollständigkeit halber wird nochmals darauf hingewiesen, dass auch gemäß dem dritten Verfahrensablauf die stabile Verteilung fest hinterlegt sein kann oder auch alternativ als eine während der Fahrt flexibel einstellbare stabile Verteilung ausgebildet sein kann.

Gemäß einer ersten Ausführungsform wird dabei das erste Bremsmoment vollständig über die erste Reibbremsvorrichtung und das zweite Bremsmoment vollständig über die zweite Reibbremsvorrichtung zur Verfügung gestellt. D.h. ein rekuperativer Bremsmomentanteil ist nicht vorgesehen. Da der rekuperative Bremsmomentanteil auf Null reduziert ist und damit das Gesamtbremsmoment ausschließlich von den beiden Reibbremsvorrichtungen erzeugt wird, steht in vorteilhafter Weise für das ABS-System mehr Arbeitsspielraum zur Verfügung.

Eine andere Ausführungsform sieht vor, dass für das erste Bremsmoment der erste Reibmomentanteil vorgegeben ist, und dass aus dem vorgegebenen ersten Reibmomentanteil gemäß der stabilen Verteilung der zweite Reibmomentanteil bestimmt wird bzw. dass für das zweite Bremsmoment der zweite Reibmomentanteil vorgegeben ist, und dass aus dem vorgegebenen zweiten Reibmomentanteil gemäß der stabilen Verteilung der erste Reibmomentanteil bestimmt wird. D.h. es liegt eine skalare Verteilung des Bremsmoments vor. Anschließend wird noch unter Berücksichtigung des ersten und/oder zweiten Reibmomentanteils gemäß der stabilen Verteilung ein erster und/oder zweiter Rekuperationsmomentanteil bestimmt, sodass das angeforderte Bremsmoment von der ersten und zweiten Reibbremsvorrichtung sowie der ersten und/oder zweiten elektrischen Maschine aufgebracht wird.

Eine alternative Ausführungsform sieht eine achsindividuelle Verteilung vor. D.h. der erste Reibmomentanteil des ersten Bremsmoments und/oder der zweite Reibmomentanteil des zweiten Bremsmoments ist wieder vorgegebenen, wobei nunmehr unter Berücksichtigung des vorgegebenen ersten und/oder zweiten Reibmomentanteil gemäß der stabilen Verteilung ein erster und/oder zweiter Rekuperationsmomentanteil bestimmt wird, wobei das angeforderte Bremsmoment von der ersten und/oder zweiten Reibbremsvorrichtung sowie der ersten und/oder zweiten elektrischen Maschine aufgebracht wird.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:

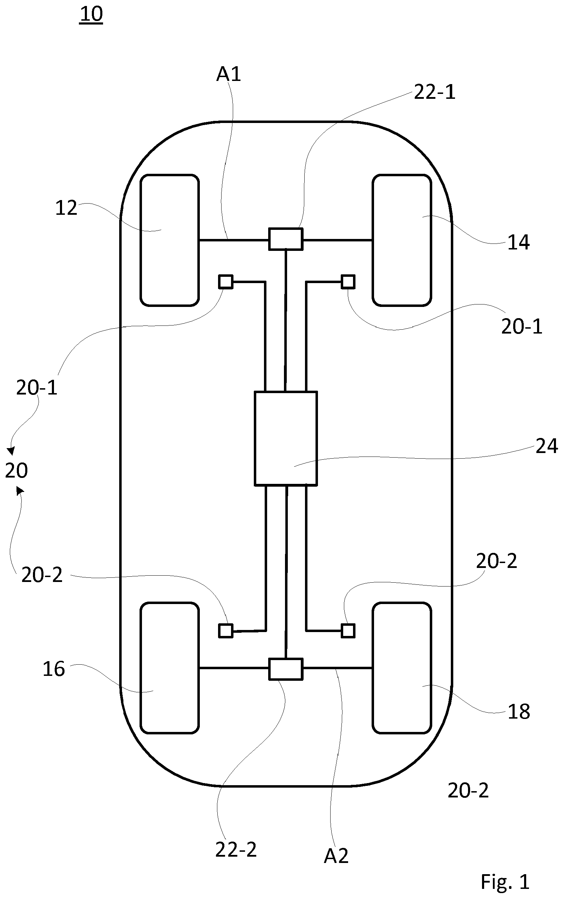

Fig. 1     eine schematische Darstellung eines Kraftfahrzeugs zur Verdeutlichung des Verfahrens zur Verteilung eines von einem Fahrer angeforderten Bremsmoments auf die Achsen eines Kraftfahrzeugs.

Fig. 1 zeigt in einer schematischen Darstellung ein insgesamt mit der Bezugsziffer 10 bezeichnetes Kraftfahrzeug. Die Vorderachse, nachfolgend auch als erste Achse bezeichnet, ist mit dem Bezugszeichen A1 und die Hinterachse, nachfolgend auch als zweite Achse bezeichnet, ist mit dem Bezugszeichen A2 bezeichnet.

Den Rädern 12, 14 der ersten Achse A1 ist jeweils eine - hier nur schematisch angedeutete - erste Reibungsbremsvorrichtung 20-1 sowie eine erste elektrische Maschine 22-1 zugeordnet. Entsprechend sind auch den Rädern 16, 18 der zweiten Achse A2 jeweils eine zweite Reibungsbremsvorrichtung 20-2 sowie eine zweite elektrische Maschine 22-2 zugeordnet. Die elektrischen Maschinen 22-1, 22-2 können dabei in bekannter Art und Weise bei Rekuperation als Generatoren betrieben werden. Die erste und zweite Reibungsbremsvorrichtung 20-1, 20-2 bilden das mit dem Bezugsziffer 20 bezeichnete Reibbremssystem des Kraftfahrzeugs 10.

Über eine Regel-Steuereinheit 24 sind das Reibbremssystem 20 und die elektrischen Maschinen 22-1, 22-2 ansteuerbar, so dass ein von einem Fahrer angefordertes Bremsmoment FBM auf die erste und zweite Achse A1, A2 aufteilbar ist.

Vorliegend weisen die beiden elektrischen Maschinen 22-1, 22-2 unterschiedliche Wirkungsgrade n1, n2 auf, nämlich die der Vorderachse A1 zugeordnete elektrische Maschine 22-1 einen Wirkungsgrad n1 = 80% und die der Hinterachse A2 zugeordnete elektrische Maschine 22-2 einen Wirkungsgrad n2 = 90%. D.h., die zweite elektrische Maschine 22-2 hat einen besseren als die erste elektrische Maschine 20-1.

Für die nachfolgende Beschreibung wird zudem angenommen, dass die erste elektrische Maschine 22-1 ein maximales Rekuperationsmoment RK1_Max = 300Nm und die zweite elektrische Maschine 22-2 ein maximales Rekuperationsmoment RK2_Max = 700Nm aufweist.

Szenario 1:

Für das Szenario 1 wird eine vollkommen unkritische Fahrsituation unterstellt, d.h. es liegt der Fall einer unkritischen Fahrstabilität vor.

    1. Für die erste Betrachtung wird angenommen, dass das angeforderte Bremsmoment FBM = 500Nm beträgt.

Verfahrensgemäß wird nun die Aufteilung des angeforderten Bremsmoments in Höhe von FBM = 500Nm in Abhängigkeit von den Wirkungsgraden n1, n2 der beiden elektrischen Maschinen 22-1, 22-2 durchgeführt.

Vorliegend hat die zweite elektrische Maschine 22-2 einen besseren Wirkungsgrad und das maximale Rekuperationsmoment RK2_Max der zweiten elektrischen Maschine 22-2 ist ausreichend, um das angeforderte Bremsmoment abzudecken.

Folglich erfolgt die Bremsung ausschließlich über die der Hinterachse A2 zugeordneten elektrischen Maschine 22-2 (=> Einachsbetrieb) und für die Verteilung des angeforderten Bremsmoments FBM auf die Achsen A1, A2 beträgt:
0% Vorderachse; 100% Hinterachse

2. Für die nachfolgende zweite Betrachtung wird angenommen, dass das angeforderte Bremsmoment FBM = 800 Nm beträgt.

Da die zweite elektrische Maschine 22-2 einen besseren Wirkungsgrad aufweist, wird für die Stellung des angeforderten Bremsmoments FBM zunächst die zweite elektrische Maschine 22-2 vollständig ausgeschöpft und das verbleibende Restmoment von der ersten elektrischen Maschine 22-1 zur Verfügung gestellt.

Vorliegend bedeutet das, dass von dem angeforderten Bremsmoment FBM=800Nm von der zweiten elektrischen Maschine 22-2 ein Anteil von RK1 = 700Nm und von der ersten elektrischen Maschine 22-1 ein Anteil von RK2 = 100Nm zur Verfügung gestellt werden.

D.h. es liegt ein Zweiachsbetrieb vor, wobei für die Verteilung des angeforderten Bremsmoments FBM auf die Achsen A1, A2 gilt:
Vorderachse 12,5%; Hinterachse 87,5%.

3. Bei nachfolgender dritten Betrachtung wird ein angefordertes Bremsmoment von FBM = 1350Nm angenommen.

Da die Summe der von den elektrischen Maschinen 22-1, 22-2 maximal zur Verfügung stellbaren Rekuperationsmomente RK1 = 300Nm, RK2 = 700Nm vorliegend nicht ausreichend sind, um das angeforderte Bremsmoment von FBM = 1350Nm zu stellen, ist ein verbleibendes Restreibmoment Reib_Rest erforderlich.

Für die Stellung des angeforderten Bremsmoment FBM = 1350Nm werden verfahrensgemäß zunächst die beiden elektrischen Maschinen 22-1, 22-2 vollständig ausgeschöpft, d.h. in Bezug auf die Rekuperationsmomente liegt vorliegend eine Verteilung von Vorderachse 30% und Hinterachse 70% vor.

Das verbleibende Restreibmoment Reib_Rest beträgt vorliegend
Reib_Rest = 1350Nm - 1000 Nm = 350Nm

Die Verteilung des verbleibenden Restreibmoments Reib_Rest auf die Achsen A1 und A2 ist frei wählbar.

Vorliegend wird die Verteilung des verbleibenden Restreibmomentes jedoch gemäß einer hinterlegten Verteilung = z.B. 60% / 40%, durchgeführt.

Vorliegend bedeutet dies, dass an der Vorderachse A1 ein erstes Reibmoment Reib-1 = 0,6*350Nm = 210 Nm und an der Hinterachse A2 ein zweites Reibmoment von Reib-2 = 0,4*350Nm = 140Nm zu stellen ist.

Das angeforderte Bremsmoment von FBM = 1350Nm wird demnach auf die erste und zweite Achse A1, A2 wie folgt aufgeteilt:

Erste Achse bzw. Vorderachse A1:

    Anteil Rekuperationsmoment RK1 = 300Nm
    Anteil erstes Reibmoment Reib-1= 210Nm

Zweite Achse bzw. Hinterachse A2:

Anteil Rekuperationsmoment RK2 = 700Nm
Anteil zweites Reibmoment Reib-2= 140Nm

Somit ergibt sich für die Verteilung des angeforderten Bremsmoments FBM auf die Achsen A1, A2 von: Vorderachse 37,8%; Hinterachse 62,2 %.

Szenario 2:

Für das Szenario 2 wird unterstellt, dass eine drohende Fahrinstabilität vorliegt.
Als Wert für die stabile Verteilung ist B1/B2 = 60/40 hinterlegt, d.h. 60% an der Vorderachse und 40% an der Hinterachse.

1. Für die erste Betrachtung wird angenommen, dass das angeforderte Bremsmoment FBM = 500Nm beträgt.

Verfahrensgemäß soll im Falle einer drohenden Fahrinstabilität das angeforderte Bremsmoment FBM = 500Nm gemäß der hinterlegten stabilen Verteilung 60/40 auf die Achsen A1 und A2 aufgeteilt werden. D.h. an der Vorderachse A1 ist ein erstes Bremsmoment BM1 = 0,6 * 500Nm = 300Nm und an der Hinterachse A2 ein zweites Bremsmoment BM2 = 0,4 * 500Nm = 200Nm zu stellen.
Da vorliegend das von der ersten elektrischen Maschine 22-1 zur Verfügung stellbare erste Rekuperationsmoment RK1 = 300Nm ausreichend ist, das erste Bremsmoment BM1 = 300Nm und das von der zweiten elektrischen Maschine 22-2 zur Verfügung stellbare zweite Rekuperationsmoment RK2 = 700Nm auseichend ist das zweite Bremsmoment BM2 = 200Nm abzudecken, wird das angeforderte Bremsmoment FBM vollständig von der ersten und zweiten elektrischen Maschine 22-1, 22-2 aufgebracht.
2. Für die zweite Betrachtung wird angenommen, dass das angeforderte Bremsmoment FBM = 800Nm beträgt.
Aufgrund der hinterlegten stabilen Verteilung B1/B2 = 60/40 ist an der Vorderachse A1 ein erstes Bremsmoment BM1 in Höhe von

BM1 = 0,6 * 800Nm = 480Nm
und an der Hinterachse A2 ein zweites Bremsmoment BM2 in Höhe von
BM2 = 0,4 * 800Nm = 320Nm
zu stellen.

Während das von der ersten elektrischen Maschine 22-1 an der Vorderachse A1 zur Verfügung stellbare Rekuperationsmoment von RK1 = 300Nm vorliegend nicht ausreichend ist, das geforderte Bremsmoment BM1 = 480Nm zur Verfügung zu stellen, ist das von der zweiten elektrischen Maschine 22-2 an der Hinterachse A2 bereitstellbare Rekuperationsmoment RK2 = 700Nm ausreichend groß.
Somit ergibt sich verbleibendes Restreibmoment Reib_Rest in Höhe von Reib-Rest = 180Nm.
Vorliegend wird aus dem verbleibenden Restreibmoment Reib_Rest gemäß einer achsindividuellen Verteilung ein mittels der ersten Reibbremsvorrichtung 20-1 an der ersten Achse A1 aufzubringendes erstes Reibungsmomentanteil BM1-Reib und ein mittels der zweiten Reibbremsvorrichtung 20-2 an der zweiten Achse A2 aufzubringendes zweites Reibungsmomentanteil BM2-Reib bestimmt.
Da, wie bereits ausgeführt, vorliegend das von der zweiten elektrischen Maschine 22-2 an der Hinterachse A2 bereitstellbare Rekuperationsmoment ausreichend ist, d.h. an der Hinterachse A2 ein zusätzlicher Reibmomentanteil nicht erforderlich ist, d.h. BM2-Reib = 0, entspricht das verbleibendes Restreibmoment Reib_Rest dem an der ersten Achse zu stellenden ersten Reibungsmomentanteil BM1-Reib= 180Nm.
Somit weist das an der Vorderachse A1 zu stellende erste Bremsmoment BM1 in Höhe von BM1=480Nm einen ersten Rekuperationsmomentanteil BM1-Rek in Höhe von BM1-Rek = 300Nm und einen ersten Reibungsmomentanteil BM1-Reib in Höhe von BM1-Reib =180Nm auf.
Da an der Hinterachse A2 ein zusätzlicher Reibmomentanteil nicht erforderlich ist, d.h. BM2-Reib=0, ist hier BM2 = BM2-Rek = 320Nm.
Eine alternative Ausführungsform sieht eine skalare Verteilung des Reibbremsmoments vor:
Hierzu wird aus dem Restreibmoment Reib-Rest=180Nm gemäß der stabilen Verteilung B1/B2 = 60% / 40% ein mittels der ersten Reibbremsvorrichtung 20-1 an der ersten Achse A1 aufzubringender erster Reibungsmomentanteil BM1-Reib und ein mittels der zweiten Reibbremsvorrichtung 20-2 an der zweiten Achse A2 aufzubringender zweiter Reibungsmomentanteil BM2-Reib bestimmt:

$$BM1\text{-}Reib = Reib\text{-}Rest = 180Nm, bzw.$$

$$BM2\text{-}Reib = BM1\text{-}Reib * B2/B1 = 180 * 2/3 = 120Nm$$

Das an der Vorderachse A1 zu stellende Bremsmoment BM1 in Höhe von BM1 = 480Nm setzt sich somit zusammen aus einem ersten Reibungsmomentanteil BM1-Reib in Höhe von BM1-Reib = 180Nm und einem ersten Rekuperationsmomentanteil BM1-Rek in Höhe BM1-Rek = 300Nm.

Das an der Hinterachse A2 zu stellende Bremsmoment BM2 in Höhe von BM2 = 320Nm weist einen zweiten Reibungsmomentanteil BM2-Reib in Höhe von BM2-Reib = 120Nm und einem zweiten Rekuperationsmomentanteil BM2-Rek in Höhe BM2-Rek = 200Nm auf.

Szenario 3:

Für das Szenario 3 wird unterstellt, dass sich das Kraftfahrzeug in einer kritischen Fahrsituation befindet, d.h. eine Fahrinstabilität liegt bereits vor.

Der hinterlegte Wert für die stabile Verteilung beträgt wiederum B1/B2 = 60/40 und vom Fahrer wird ein Bremsmoment von FBM 1000Nm angefordert.

Somit ist an der Vorderachse A1 ein erstes Bremsmoment BM1 in Höhe von BM1 = 600Nm und an der Hinterachse A2 ein zweites Bremsmoment BM2 in Höhe von BM2 = 400Nm zu stellen.

Gemäß einer ersten Betrachtung ist vorgesehen, dass die an den Achsen A1 und A2 zu stellenden Bremsmomente BM1, BM2 vollständig über die erste und zweite Reibbremsvorrichtung 20-1, 20-2 aufgebracht werden sollen. D.h. die Rekuperationsmomente werden auf Null zurückgefahren.

Vorliegend bedeutet das, dass an der Vorderachse A1 von der ersten Reibbremsvorrichtung 20-1 ein erstes Bremsmoment BM1 in Höhe von BM1= 0,6 * 1000 Nm = 600Nm und an der Hinterachse A2 von der zweiten Reibbremsvorrichtung 20-2 ein zweites Bremsmoment BM2 in Höhe von BM2 = 0,4 *1000 Nm = 400Nm gestellt wird.

Für die nachfolgende Betrachtung ist vorgesehen, dass die an den beiden Achsen A1, A2 zu stellenden Bremsmomente BM1, BM2 jeweils noch einen Rekuperationsmomentanteil BM1-Rek, BM2-Rek aufweisen sollen.

Es wird angenommen, dass der von der ersten Reibbremsvorrichtung 20-1 zu stellende erste Reibmomentanteil BM1-Reib vorgegeben ist, vorliegend ist BM1-Reib = 300Nm.

Mit Hilfe der stabilen Verteilung B1/B2 = 60/40 wird der mittels der zweiten Reibbremsvorrichtung 20-2 an der zweiten Achse A2 aufzubringende zweite Reibungsmomentanteil BM2-Reib bestimmt:

$$BM2\text{-}Reib = BM1\text{-}Reib * B2/B1 = 300 * 2/3 = 200Nm$$

Das an der Vorderachse A1 zu stellende Bremsmoment BM1 in Höhe von BM1 = 600Nm setzt sich somit zusammen aus dem vorgegebenen ersten Reibungsmomentanteil BM1-Reib in Höhe von BM1-Reib = 300Nm und einem ersten Rekuperationsmomentanteil BM1-Rekin Höhe BM1-Rek = 300Nm.

Das an der Hinterachse A2 zu stellende Bremsmoment BM2 in Höhe von BM2 = 400Nm weist einen zweiten Reibungsmomentanteil BM2-Reib in Höhe von BM2-Reib = 200Nm und einem zweiten Rekuperationsmomentanteil BM2-Rek in Höhe BM2-Rek = 200Nm auf.

Somit wird das an der erste Achse A1 zu stellende Bremsmoment BM1 von der ersten Reibbremsvorrichtung 20-1 und der ersten elektrischen Maschine 22-1 aufgebracht. Entsprechend wird auch das an der zweiten Achse A2 zu stellende Bremsmoment BM2 von der der zweiten Reibbremsvorrichtung 20-2 und der zweiten elektrischen Maschine 22-2 aufgebracht.

Denkbar ist aber auch eine achsindividuelle Verteilung. Dann ist an der Vorderachse A1 ein erstes Bremsmoment BM1 zu stellen, das den hier vorgegebenen Reibungsmomentanteil BM1-Reib in Höhe von 300Nm und einen Rekuperationsmomentanteil in Höhe von BM1-Rek = 300Nm aufweist. Das an der zweiten Achse A2 zu stellende zweite Bremsmoment BM2 weist hingegen nur einen rekuperativen Anteil in Höhe von BM2-Rek = 400Nm auf, da das von der zweiten elektrischen Maschine 22-2 zur Verfügung stellbare Rekuperationsmoment RK2_Max ausreichend ist, das geforderte zweite Bremsmoment BM2 in Höhe von BM2 = 400Nm zu stellen.

D.h. das an der erste Achse A1 zu stellende Bremsmoment BM1 wird von der ersten Reibbremsvorrichtung 20-1 und der ersten elektrischen Maschine 22-1 aufgebracht, während das an der zweiten Achse A2 zu stellende Bremsmoment BM2 vorliegend ausschließlich von der zweiten elektrischen Maschine 22-2 zur Verfügung gestellt wird.

**Patentansprüche**

1. Verfahren zur Verteilung eines von einem Fahrer angeforderten Bremsmoments (FBM) auf die Achsen (A1, A2) eines Kraftfahrzeugs, wobei den Rädern (12, 14) der ersten Achse (A1) eine erste Reibbremsvorrichtung (20-1) sowie eine einen ersten Wirkungsgrad (n1) aufweisende erste elektrische Maschine (22-1) und den Rädern (16, 18) der zweiten Achse (A2) eine zweite Reibbremsvorrichtung (20-2) sowie eine einen zweiten Wirkungsgrad (n2) aufweisende zweite elektrische Maschine (22-2) zugeordnet sind, bei dem verfahrensgemäß die Aufteilung des angeforderten Bremsmoments (FBM) auf die erste und/oder zweite Achse (A1, A2) sowie die Bestimmung der Anteile der von der ersten und/oder zweiten elektrischen Maschine (22-1, 22-2) zur Verfügung zu stellenden Rekuperationsmomente (RK1, RK2) am angeforderten Bremsmoment (FBM) unter Berücksichtigung der aktuellen Fahrstabilität des Kraftfahrzeugs durchgeführt wird,
**dadurch gekennzeichnet, dass**

bei Vorliegen einer unkritischer Fahrstabilität des Kraftfahrzeugs die Aufteilung des Bremsmoments (FBM) und die Bestimmung der Anteile der von der ersten und/oder zweiten elektrischen Maschine (22-1, 22-2) zur Verfügung zu stellenden Rekuperationsmomente (RK1, RK2) gemäß einem ersten Verfahrensablauf durchgeführt wird,
und dass
bei Vorliegen einer drohenden Fahrinstabilität des Kraftfahrzeugs die Aufteilung des Bremsmoments (FBM) und die Bestimmung der Anteile der von der ersten und/oder zweiten elektrischen Maschine (22-1, 22-2) zur Verfügung zu stellenden Rekuperationsmomente (RK1, RK2) gemäß einem zweiten Verfahrensablauf durchgeführt wird,
und dass
bei Vorliegen einer Fahrinstabilität des Kraftfahrzeugs die Aufteilung des Bremsmoments (FBM) und die Bestimmung der Anteile der von der ersten und/oder zweiten elektrischen Maschine (22-1, 22-2) zur Verfügung zu stellenden Rekuperationsmomente (RK1, RK2) gemäß einem dritten Verfahrensablauf durchgeführt wird, wobei
gemäß dem ersten Verfahrensablauf die Aufteilung des angeforderten Bremsmoments (FBM) auf die erste und zweite Achse (A1, A2) in Abhängigkeit von den Wirkungsgraden (n1, n2) der elektrischen Maschinen (22-1, 22-2) durchgeführt wird, indem zunächst die elektrische Maschine mit dem besseren Wirkungsgrad und anschließend - sofern das von dieser elektrischen Maschine maximal zur Verfügung stellbare Rekuperationsmoment nicht ausreichend ist - die andere elektrische Maschine für die Stellung des angeforderten Bremsmoment (FBM) ausgeschöpft wird, wobei
gemäß dem zweiten Verfahrensablauf das angeforderte Bremsmoment (FBM) mittels einer stabilen Verteilung (B1/B2) derart in ein an der ersten Achse (A1) aufzubringendes erstes Bremsmoment (BM1) und ein an der zweiten Achse (A2) aufzubringendes zweites Bremsmoment (BM2) aufgeteilt wird, dass das erste Bremsmoment (BM1) zwingend einen über die erste elektrische Maschine (22-1) zu stellenden ersten Rekuperationsmomentanteil (BM1-Rek) > 0 und das zweite Bremsmoment (BM2) zwingend einen über die zweite elektrische Maschine (22-2) zu stellenden zweiten Rekuperationsmomentanteil (BM2-Rek) > 0 aufweist, und wobei
gemäß dem dritten Verfahrensablauf das angeforderte Bremsmoment (FBM) mittels einer stabilen Verteilung (B1/B2) in ein an der ersten Achse (A1) aufzubringendes erstes Bremsmoment (BM1) und ein an der zweiten Achse (A2) aufzubringendes zweites Bremsmoment (BM2) aufgeteilt wird, wobei das erste Bremsmoment (BM1) zwingend einen über die erste Reibbremsvorrichtung (20-1) aufzubringenden ersten Reibmomentanteil (BM1-Reib) und/oder das zweite Bremsmoment (BM2) zwingend einen über die zweite Reibbremsvorrichtung (20-2) aufzubringenden zweiten Reibmomentanteil (BM2-Reib) aufweist.

2. Verfahren nach Anspruch 1,
**dadurch gekennzeichnet, dass**

- wenn das von der ersten elektrischen Maschine (22-1) zur Verfügung stellbare erste Rekuperationsmoment (RK1) und/oder das von der zweiten elektrischen Maschine (22-2) zur Verfügung stellbare zweite Rekuperationsmoment (RK2) ausreichend ist, das angeforderte Bremsmoment (FBM) abzudecken - das angeforderte Bremsmoment (FBM) vollständig von der ersten und/oder zweiten elektrischen Maschine (22-1, 22-2) abgedeckt wird.

3. Verfahren nach Anspruch 1,
**dadurch gekennzeichnet, dass**

- wenn das von der ersten elektrischen Maschine (22-1) zur Verfügung stellbare Rekuperationsmoment (RK1) und das von der zweiten elektrischen Maschine (22-2) zur Verfügung stellbare Rekuperationsmoment (RK2) nicht ausreichend sind, das angeforderte Bremsmoment (FBM) abzudecken - ein verbleibendes Restreibmoment (Reib_Rest) bestimmt wird, und das angeforderte Bremsmoment (FBM) von der ersten und zweiten elektrischen Maschine (22-1, 22-2) sowie der ersten und/oder zweiten Reibbremsvorrichtung (20-1, 20-2) aufgebracht wird.

4. Verfahren nach Anspruch 3,
**dadurch gekennzeichnet, dass**
das Restreibmoment (Reib-Rest) gemäß einer skalaren Verteilung in ein mittels der ersten Reibbremsvorrichtung (20-1) an der ersten Achse (A1) aufzubringendes erstes Reibmoment (Reib-1) und ein mittels der zweiten Reibbremsvorrichtung (20-2) an der zweiten Achse (A2) aufzubringendes zweites Reibmoment (Reib-2) aufgeteilt wird oder gemäß einer achsindividuellen Verteilung in ein mittels der ersten Reibbremsvorrichtung (20-1) an der ersten Achse (A1) aufzubringendes erstes Reibmoment (Reib-1) und/oder ein mittels der zweiten Reibbremsvorrichtung (20-2) an der zweiten Achse (A2) aufzubringendes zweites Reibmoment (Reib-2) aufgeteilt wird.

5. Verfahren nach Anspruch 1,
**dadurch gekennzeichnet, dass**

- wenn das von der ersten elektrischen Maschine (22-1) zur Verfügung stellbare erste Rekuperationsmoment (RK1) ausreichend ist das erste Bremsmoment (BM1) und das von der zweiten elektrischen Maschine (22-2) zur Verfügung stellbare zweite Rekuperationsmoment (RK2) ausreichend ist das zweite Bremsmoment (BM2) abzudecken - das erste Bremsmoment (BM1) ausschließlich durch den ersten Rekuperationsmomentanteil (BM1-Rek) und das zweite Bremsmoment (BM2) ausschließlich durch den zweiten Rekuperationsmomentanteil (BM2-Rek) gebildet wird und somit das angeforderte Bremsmoment (FBM) vollständig von der ersten und zweiten elektrischen Maschine (22-1, 22-2) aufgebracht wird.

6. Verfahren nach Anspruch 1,
**dadurch gekennzeichnet, dass**

- wenn das von der ersten elektrischen Maschine (22-1) zur Verfügung stellbare Rekuperationsmoment (RK1) nicht ausreichend ist das erste Bremsmoment (BM1) und/oder das von der zweiten elektrischen Maschine (22-2) zur Verfügung stellbare Rekuperationsmoment (RK2) nicht ausreichend ist das zweite Bremsmoment (BM2) abzudecken - ein verbleibendes Restreibmoment (Reib_Rest) bestimmt wird, und dass das angeforderte Bremsmoment (FBM) von der ersten und zweiten elektrischen Maschine (22-1, 22-2) sowie der ersten und/oder zweiten Reibbremsvorrichtung (20-1, 20-2) aufgebracht wird.

7. Verfahren nach Anspruch 6,
**dadurch gekennzeichnet, dass**
das aus dem Restreibmoment (Reib-Rest) gemäß der stabilen Verteilung (B1/B2) ein mittels der ersten Reibbremsvorrichtung (20-1) an der ersten Achse (A1) aufzubringender erster Reibungsmomentanteil (BM1-Reib) und ein mittels der zweiten Reibbremsvorrichtung (20-2) an der zweiten Achse (A2) aufzubringender zweiter Reibungsmomentanteil (BM2-Reib) bestimmt wird, und dass unter Berücksichtigung des ersten und zweiten Reibmomentanteils (BM1-Reib, BM2-Reib) gemäß der stabilen Verteilung (B1/B2) ein erster und zweiter Rekuperationsmomentanteil (BM1-Rek, BM2-Rek) bestimmt wird, wobei das angeforderte Bremsmoment (FBM) von der ersten und zweiten elektrischen Maschine (22-1, 22-2) sowie der ersten und zweiten Reibbremsvorrichtung (20-1, 20-2) aufgebracht wird.

8. Verfahren nach Anspruch 6,
**dadurch gekennzeichnet, dass**
das aus dem Restreibmoment (Reib-Rest) gemäß einer achsindividuellen Verteilung ein mittels der ersten Reibbremsvorrichtung (20-1) an der ersten Achse (A1) aufzubringender erster Reibungsmomentanteil (BM1-Reib) und/oder ein mittels der zweiten Reibbremsvorrichtung (20-2) an der zweiten Achse (A2) aufzubringender zweiter Reibungsmomentanteil (BM2-Reib) bestimmt wird, wobei das angeforderte Bremsmoment (FBM) von der ersten und zweiten elektrischen Maschine (22-1, 22-2) sowie der ersten und/oder zweiten Reibbremsvorrichtung (20-1, 20-2) aufgebracht wird.

9. Verfahren nach Anspruch 1,

**dadurch gekennzeichnet, dass**
das erste Bremsmoment (BM1) vollständig über die erste Reibbremsvorrichtung (20-1) und das zweite Bremsmoment (BM2) vollständig über die zweite Reibbremsvorrichtung (20-2) zur Verfügung gestellt wird.

**10.** Verfahren nach Anspruch 1,
**dadurch gekennzeichnet, dass**
für das erste Bremsmoment (BM1) der erste Reibmomentanteil (BM1-Reib) oder für das zweite Bremsmoment (BM2) der zweite Reibmomentanteil (BM2-Reib) vorgegeben ist und dass aus dem vorgegebenen ersten oder zweiten Reibmomentanteil (BM1-Reib, BM2-Reib) gemäß der stabilen Verteilung (B1/B2) der zweite oder erste Reibmomentanteil (BM2-Reib, BM1-Reib) bestimmt wird und dass unter Berücksichtigung des ersten und/oder zweiten Reibmomentanteil (BM1-Reib, BM2-Reib) gemäß der stabilen Verteilung (B1/B2) ein erster und/oder zweiter Rekuperationsmomentanteil (BM1-Rek, BM2-Rek) bestimmt wird, wobei das angeforderte Bremsmoment (FBM) von der ersten und zweiten Reibbremsvorrichtung (20-1, 20-2) sowie der ersten und/oder zweiten elektrischen Maschine (22-1, 22-2) aufgebracht wird.

**11.** Verfahren nach Anspruch 1,
**dadurch gekennzeichnet, dass**
für das erste Bremsmoment (BM1) der erste Reibmomentanteil (BM1-Reib) und/oder für das zweite Bremsmoment (BM2) der zweite Reibmomentanteil (BM2-Reib) vorgegeben ist und dass unter Berücksichtigung des ersten und/oder zweiten Reibmomentanteil (BM1-Reib, BM2-Reib) gemäß der stabilen Verteilung (B1/B2) ein erster und/oder zweiter Rekuperationsmomentanteil (BM1-Rek, BM2-Rek) bestimmt wird, wobei das angeforderte Bremsmoment (FBM) von der ersten und/oder zweiten Reibbremsvorrichtung (20-1, 20-2) sowie der ersten und/oder zweiten elektrischen Maschine (22-1, 22-2) aufgebracht wird.

**12.** Verfahren nach einem der Ansprüche 1 bis 11,
**dadurch gekennzeichnet, dass**
die Fahrstabilität des Kraftfahrzeugs (10) anhand einer detektierten Querbeschleunigung und/oder eines detektierten Schlupfs eines Rades (12, 14, 16, 18) des Kraftfahrzeugs und/oder anhand einer Gierrate und/oder Gierratendifferenz und/oder einer Fahrzeuggeschwindig-keit und/oder einer Differenz der Raddrehzahlen der Räder (12, 14, 16, 18) zwischen erster und zweiter Achse (A1, A2) oder der rechten und linken Seite des Kraftfahrzeugs (10) und/oder einer Kraftschlussausnutzung an den Rädern (12, 14, 16, 18) ermittelt wird.

**Claims**

**1.** Method for distributing a braking torque (FBM), requested by a driver, over the axles (A1, A2) of a motor vehicle, wherein the wheels (12, 14) of the first axle (A1) are associated with a first friction brake device (20-1) and a first electrical engine (22-1) having a first efficiency (n1), and the wheels (16, 18) of the second axle (A2) are associated with a second friction brake device (20-2) and a second electrical engine (22-2) having a second efficiency (n2), wherein in accordance with the method, the requested braking torque (FBM) is allocated among the first and/or second axle (A1, A2) and the components of the recovery torques (RK1, RK2) to be provided by the first and/or second electrical engine (22-1, 22-2) in relation to the requested braking torque (FBM) are determined, taking into account the current driving stability of the motor vehicle,
**characterised in that**

if the driving stability of the motor vehicle is non-critical, the braking torque (FBM) is allocated and the components of the recovery torques (RK1, RK2) to be provided by the first and/or second electrical engine (22-1, 22-2) are determined according to a first method sequence, and
if there is impending driving instability in the motor vehicle, the braking torque (FBM) is allocated and the components of the recovery torques (RK1, RK2) to be provided by the first and/or second electrical engine (22-1, 22- 2) are determined according to a second method sequence,
and if there is driving instability in the motor vehicle, the braking torque (FBM) is allocated and the components of the recovery torques (RK1, RK2) to be provided by the first and/or second electrical engine (22-1, 22- 2) are determined according to a third method sequence, wherein
according to the first method sequence, the requested braking torque (FBM) is allocated among the first and second axles (A1, A2) depending on the efficiencies (n1, n2) of the electrical engines (22-1, 22-2) by first utilising the electrical engine having the better efficiency and then, if the maximum recovery torque provided by this electrical engine is not sufficient, utilising the other electrical engine to provide the requested braking torque (FBM), wherein

according to the second method sequence, the requested braking torque (FBM) is allocated by means of a stable distribution (B1/B2) into a first braking torque (BM1) to be applied to the first axle (A1) and a second braking torque (BM2) to be applied to the second axle (A2) such that the first braking torque (BM1) necessarily has a first recovery torque component (BM1-Rek) > 0 to be provided via the first electrical engine (22-1) and the second braking torque (BM2) necessarily has a second recovery torque component (BM2-Rek) > 0 to be provided via the second electrical engine (22- 2), and wherein

according to the third method sequence, the requested braking torque (FBM) is allocated by means of a stable distribution (B1/B2) into a first braking torque (BM1) to be applied to the first axle (A1) and a second braking torque (BM2) to be applied to the second axle (A2), wherein the first braking torque (BM1) necessarily has a first frictional torque component (BM1 friction) to be applied via the first friction brake device (20-1) and/or the second braking torque (BM2) necessarily has a second frictional torque component (BM2 friction) to be applied via the second friction brake device (20-2).

2. Method according to claim 1,
   **characterised in that**

   - if the first recovery torque (RK1) available from the first electrical engine (22-1) and/or the second recovery torque (RK2) available from the second electrical engine (22-2) is sufficient to cover the requested braking torque (FBM), the requested braking torque (FBM) is completely covered by the first and/or second electrical engine (22-1,22-2).

3. Method according to claim 1,
   **characterised in that**

   - when the recovery torque (RK1) available from the first electric engine (22-1) and the recovery torque (RK2) available from the second electric engine (22-2) are insufficient to cover the requested braking torque (FBM), a remaining residual friction torque (Reib_Rest) is determined, and the requested braking torque (FBM) is applied by the first and second electric engines (22-1, 22-2) and the first and/or second friction brake device (20-1, 20-2).

4. Method according to claim 3,
   **characterised in that**
   the residual frictional torque (Reib_Rest) is allocated according to a scalar distribution into a first frictional torque (Reib-1) to be applied by the first friction brake device (20-1) on the first axle (A1) and a second frictional torque (Reib-2) to be applied by the second friction brake device (20-2) on the second axle (A2) or is allocated according to an axle-specific distribution into a first friction torque (Reib-1) to be applied by the first friction brake device (20-1) on the first axle (A1) and/or a second friction torque (Reib-2) to be applied by the second friction brake device (20-2) on the second axle (A2).

5. Method according to claim 1,
   **characterised in that**

   - if the first recovery torque (RK1) available from the first electrical engine (22-1) is sufficient to cover the first braking torque (BM1) and the second recovery torque (RK2) available from the second electrical engine (22-2) is sufficient to cover the second braking torque (BM2), then the first braking torque (BM1) is formed exclusively by the first recovery torque component (BM1-Rek) and the second braking torque (BM2) is formed exclusively by the second recovery torque component (BM2-Rek) and the requested braking torque (FBM) is thus applied completely by the first and second electrical engine (22-1, 22- 2).

6. Method according to claim 1,
   **characterised in that**

   - if the recovery torque (RK1) available from the first electrical engine (22-1) is not sufficient to cover the first braking torque (BM1) and/or the recovery torque (RK2) available from the second electrical engine (22-2) is not sufficient to cover the second braking torque (BM2), then a remaining residual frictional torque (Reib_Rest) is determined, and **in that** the requested braking torque (FBM) is applied by the first and second electrical engine (22-1, 22-2) and the first and/or second friction brake device (20-1, 20-2).

**7.** Method according to claim 6,
**characterised in that**
a first frictional torque component (BM1-Reib) to be applied to the first axle (A1) by the first friction brake device (20-1) and a second frictional torque component (BM2-Reib) to be applied to the second axle (A2) by the second friction brake device (20-2) are determined from the residual frictional torque (Reib-Rest) according to the stable distribution (B1/B2), and **in that**, taking into account the first and second frictional torque component (BM1-Reib, BM2-Reib), a first and second recovery torque component (BM1-Rek, BM2-Rek) is determined according to the stable distribution (B1/B2), wherein the requested braking torque (FBM) is applied by the first and second electrical engine (22-1, 22-2) and the first and second friction brake device (20-1, 20-2).

**8.** Method according to claim 6,
**characterised in that**
a first frictional torque component (BM1-Reib) to be applied to the first axle (A1) by the first friction brake device (20-1) and/or a second frictional torque component (BM2-Reib) to be applied to the second axle (A2) by the second friction brake device (20-2) is determined from the residual frictional torque (Reib-Rest) according to an axle-specific distribution, wherein the requested braking torque (FBM) is applied by the first and second electrical engine (22-1, 22-2) and the first and/or second friction brake device (20-1, 20-2).

**9.** Method according to claim 1,
**characterised in that**
the first braking torque (BM1) is completely provided via the first friction brake device (20-1) and the second braking torque (BM2) is completely provided via the second friction brake device (20-2).

**10.** Method according to claim 1,
**characterised in that**
for the first braking torque (BM1) the first frictional torque component (BM1-Reib) is predefined or for the second braking torque (BM2) the second frictional torque component (BM2-Reib) is predefined and **in that** from the predefined first or second frictional torque component (BM1-Reib, BM2-Reib), the second or first frictional torque component (BM2-Reib, BM1-Reib) is determined according to the stable distribution (B1/B2), and **in that**, taking into account the first and/or second frictional torque component (BM1-Reib, BM2-Reib), a first and/or second recovery torque component (BM1-Rek, BM2-Rek) is determined according to the stable distribution (B1/B2), wherein the requested braking torque (FBM) is applied by the first and second friction brake device (20-1, 20-2) and the first and/or second electrical engine (22-1, 22-2).

**11.** Method according to claim 1,
**characterised in that**
for the first braking torque (BM1) the first frictional torque component (BM1-Reib) is predefined and/or for the second braking torque (BM2) the second frictional torque component (BM2-Reib) is predefined, and **in that**, taking into account the first and/or second frictional torque component (BM1-Reib, BM2-Reib), a first and/or second recovery torque component (BM1-Rek, BM2-Rek) is determined according to the stable distribution (B1/B2), wherein the requested braking torque (FBM) is applied by the first and/or second friction brake device (20-1, 20-2) and the first and/or second electrical engine (22-1, 22-2).

**12.** Method according to any one of claims 1 to 11,
**characterised in that**
the driving stability of the motor vehicle (10) is determined on the basis of a detected lateral acceleration and/or a detected slip of a wheel (12, 14, 16, 18) of the motor vehicle and/or on the basis of a yaw rate and/or yaw rate difference and/or a vehicle speed and/or a difference in the wheel speeds of the wheels (12, 14, 16, 18) between the first and second axle (A1, A2) or the right and left side of the motor vehicle (10) and/or a frictional connection utilisation on the wheels (12, 14, 16, 18).

**Revendications**

**1.** Procédé de répartition d'un couple de freinage (FBM) demandé par un conducteur sur les essieux (A1, A2) d'un véhicule automobile, dans lequel aux roues (12, 14) du premier essieu (A1) sont associés un premier dispositif de freinage par friction (20-1) ainsi qu'un premier moteur électrique (22-1) présentant un premier rendement (n1) et aux roues (16, 18) du second essieu (A2) sont associés un second dispositif de freinage par friction (20-2) ainsi qu'un second moteur électrique (22-2) présentant un second rendement (n2), pour lequel selon le procédé, la répartition du couple de freinage (FBM) demandé sur le premier et/ou second essieu (A1, A2) ainsi que la détermination des parts de couples de récupération (RK1, RK2) à mettre à disposition par le premier et/ou second moteur électrique (22-1, 22-2) sont réalisées au niveau du couple de freinage (FBM) demandé en tenant compte de la stabilité de déplacement actuelle du véhicule automobile,
**caractérisé en ce que**

en présence d'une stabilité de déplacement non critique du véhicule automobile, la répartition du couple de freinage (FBM) et la détermination des parts de couples de récupération (RK1, RK2) à mettre à disposition par le premier et/ou second moteur électrique (22-1, 22-2) sont réalisées selon un premier déroulement de procédé, et que

en présence d'une instabilité de déplacement menaçante du véhicule automobile, la répartition du couple de freinage (FBM) et la détermination des parts de couples de récupération (RK1, RK2) à mettre à disposition par le premier et/ou second moteur électrique (22-1, 22-2) sont réalisées selon un deuxième déroulement de procédé,

et qu'en présence d'une instabilité de déplacement du véhicule automobile, la répartition du couple de freinage (FBM) et la détermination des parts de couples de récupération (RK1, RK2) à mettre à disposition par le premier et/ou second moteur électrique (22-1, 22-2) sont réalisées selon un troisième déroulement de procédé, dans lequel

selon le premier déroulement de procédé, la répartition du couple de freinage (FBM) demandé sur le premier et second essieu (A1, A2) est réalisée en fonction des rendements (n1, n2) des moteurs électriques (22-1, 22-2), **en ce que** tout d'abord, le moteur électrique avec le meilleur rendement est épuisé et ensuite, dans la mesure où le couple de récupération pouvant être mis à disposition au maximum par ce moteur électrique n'est pas suffisant, l'autre moteur électrique est épuisé pour la position du couple de freinage (FBM) demandé, dans lequel

selon le deuxième déroulement de procédé, le couple de freinage (FBM) demandé est réparti au moyen d'une répartition stable (B1/B2) en un premier couple de freinage (BM1) à appliquer sur le premier essieu (A1) et un second couple de freinage (BM2) à appliquer sur le second essieu (A2) de telle manière que le premier couple de freinage (BM1) présente obligatoirement une première part de couple de récupération (BM1-Rek) > 0 à mettre à disposition par le biais du premier moteur électrique (22-1) et le second couple de freinage (BM2) présente obligatoirement une seconde part de couple de récupération (BM2-Rek) > 0 à mettre à disposition par le biais du second moteur électrique (22-2), et dans lequel

selon le troisième déroulement de procédé, le couple de freinage (FBM) demandé est réparti au moyen d'une répartition stable (B1/B2) en un premier couple de freinage (BM1) à appliquer sur le premier essieu (A1) et un second couple de freinage (BM2) à appliquer sur le second essieu (A2), dans lequel le premier couple de freinage (BM1) présente obligatoirement une première part de couple de friction (BM1-Reib) à appliquer par le biais du premier dispositif de freinage par friction (20-1) et/ou le second couple de freinage (BM2) présente obligatoirement une seconde part de couple de friction (BM2-Reib) à appliquer par le biais du second dispositif de freinage par friction (20-2).

2. Procédé selon la revendication 1,
   **caractérisé en ce que**

   - lorsque le premier couple de récupération (RK1) pouvant être mis à disposition par le premier moteur électrique (22-1) et/ou le second couple de récupération (RK2) pouvant être mis à disposition par le second moteur électrique (22-2) est suffisant afin de couvrir le couple de freinage (FBM) demandé, le couple de freinage (FBM) demandé est complètement couvert par le premier et/ou second moteur électrique (22-1, 22-2).

3. Procédé selon la revendication 1,
   **caractérisé en ce que**

   - lorsque le couple de récupération (RK1) pouvant être mis à disposition par le premier moteur électrique (22-1) et le couple de récupération (RK2) pouvant être mis à disposition par le second moteur électrique (22-2) n'est pas suffisant afin de couvrir le couple de freinage (FBM) demandé, un couple de friction restant (Reib_Rest) est déterminé, et le couple de freinage (FBM) demandé est appliqué par le premier et second moteur électrique (22-1, 22-2) ainsi que le premier et/ou second dispositif de freinage par friction (20-1, 20-2).

4. Procédé selon la revendication 3,

**caractérisé en ce que**
le couple de friction restant (Reib-Rest) est réparti selon une répartition scalaire en un premier couple de friction (Reib-1) à appliquer au moyen du premier dispositif de freinage par friction (20-1) sur le premier essieu (A1) et un second couple de friction (Reib-2) à appliquer au moyen du second dispositif de freinage par friction (20-2) sur le second essieu (A2) ou selon une répartition individuelle aux essieux en un premier couple de friction (Reib-1) à appliquer au moyen du premier dispositif de freinage par friction (20-1) sur le premier essieu (A1) et/ou un second couple de friction (Reib-2) à appliquer au moyen du second dispositif de freinage par friction (20-2) sur le second essieu (A2).

5. Procédé selon la revendication 1,
**caractérisé en ce que**

- lorsque le premier couple de récupération (RK1) pouvant être mis à disposition par le premier moteur électrique (22-1) est suffisant, le premier couple de freinage (BM1) et le second couple de récupération (RK2) pouvant être mis à disposition par le second moteur électrique (22-2) est suffisant afin de couvrir le second couple de freinage (BM2), le premier couple de freinage (BM1) est exclusivement formé par la première part de couple de récupération (BM1-Rek) et le second couple de freinage (BM2) est exclusivement formé par la seconde part de couple de récupération (BM2-Rek) et ainsi le couple de freinage (FBM) demandé est complètement appliqué par le premier et second moteur électrique (22-1, 22-2).

6. Procédé selon la revendication 1,
**caractérisé en ce que**

- lorsque le couple de récupération (RK1) pouvant être mis à disposition par le premier moteur électrique (22-1) n'est pas suffisant, le premier couple de freinage (BM1) et/ou le couple de récupération (RK2) pouvant être mis à disposition par le second moteur électrique (22-2) n'est pas suffisant afin de couvrir le second couple de freinage (BM2), un couple de friction restant (Reib-Rest) est déterminé, et **en ce que** le couple de freinage (FBM) demandé est appliqué par le premier et second moteur électrique (22-1, 22-2) ainsi que le premier et/ou second dispositif de freinage par friction (20-1, 20-2).

7. Procédé selon la revendication 6,
**caractérisé en ce que**
à partir du couple de friction restant (Reib-Rest) selon la répartition stable (B1/B2), une première part de couple de friction (BM1-Reib) à appliquer au moyen du premier dispositif de freinage par friction (20-1) sur le premier essieu (A1) et une seconde part de couple de friction (BM2-Reib) à appliquer au moyen du second dispositif de freinage par friction (20-2) sur le second essieu (A2) sont déterminées et **en ce qu'**en tenant compte de la première et la seconde part de couple de friction (BM1-Reib, BM2-Reib) selon la répartition stable (B1/B2), une première et une seconde part de couple de récupération (BM1-Rek, BM2-Rek) sont déterminées, dans lequel le couple de freinage (FBM) demandé est appliqué par le premier et second moteur électrique (22-1,22-2) ainsi que le premier et second dispositif de freinage par friction (20-1,20-2).

8. Procédé selon la revendication 6,
**caractérisé en ce que**
à partir du couple de friction restant (Reib-Rest) selon une répartition individuelle aux essieux, une première part de couple de friction (BM1-Reib) à appliquer au moyen du premier dispositif de freinage par friction (20-1) sur le premier essieu (A1) et/ou une seconde part de couple de friction (BM2-Reib) à appliquer au moyen du second dispositif de freinage par friction (20-2) sur le second essieu (A2) est déterminée, dans lequel le couple de freinage (FBM) demandé est appliqué par le premier et second moteur électrique (22-1,22-2) ainsi que le premier et second dispositif de freinage par friction (20-1,20-2).

9. Procédé selon la revendication 1,
**caractérisé en ce que**
le premier couple de freinage (BM1) est mis à disposition complètement par le biais du premier dispositif de freinage par friction (20-1) et le second couple de freinage par friction (20-2) est mis à disposition complètement par le biais du second dispositif de freinage par friction (20-2).

10. Procédé selon la revendication 1,
**caractérisé en ce que**

pour le premier couple de freinage (BM1), la première part de couple de friction (BM1- Reib) ou pour le second couple de freinage (BM2), la seconde part de couple de friction (BM2-Reib) est prédéfinie et **en ce qu'**à partir de la première ou seconde part de couple de friction (BM1-Reib, BM2-Reib) prédéfinie selon la répartition stable (B1/B2), la seconde ou la première part de couple de friction (BM2-Reib, BM1-Reib) est déterminée et **en ce qu'**en tenant compte de la première et/ou la seconde part de couple de friction (BM1-Reib, BM2-Reib) selon la répartition stable (B1/B2), une première et/ou une seconde part de couple de récupération (BM1-Rek, BM2-Rek) est déterminée, dans lequel le couple de freinage (FBM) demandé est appliqué par le premier et second dispositif de freinage par friction (22-1,22-2) ainsi que le premier et/ou second moteur électrique (22-1,22-2).

11. Procédé selon la revendication 1,
   **caractérisé en ce que**
   pour le premier couple de freinage (BM1), la première part de couple de friction (BM1- Reib) et/ou pour le second couple de freinage (BM2), la seconde part de couple de friction (BM2-Reib) est prédéfinie et qu'en tenant compte de la première et/ou la seconde part de couple de friction (BM1-Reib, BM2-Reib) selon la répartition stable (B1/B2), une première et/ou une seconde part de couple de récupération (BM1-Rek, BM2-Rek) est déterminée, dans lequel le couple de freinage (FBM) demandé est appliqué par le premier et/ou second dispositif de freinage par friction (20-1, 20-2) ainsi que le premier et/ou second moteur électrique (22-1,22-2).

12. Procédé selon l'une quelconque des revendications 1 à 11,
   **caractérisé en ce que**
   la stabilité de déplacement du véhicule automobile (10) est calculée à l'aide d'une accélération latérale détectée et/ou d'un patinage détecté d'une roue (12, 14, 16, 18) du véhicule automobile et/ou à l'aide d'un taux de lacet et/ou d'une différence de taux de lacet et/ou d'une vitesse de véhicule et/ou d'une différence des vitesses de rotation de roue des roues (12, 14, 16, 18) entre le premier et second essieux (A1, A2) ou du côté droit et gauche du véhicule automobile (10) et/ou d'une utilisation de l'adhérence sur les roues (12, 14, 16, 18).

10

A1

22-1

12

14

20-1

20-1

20

24

20-2

20-2

16

18

20-2

22-2

A2

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015106746 A1
- DE 102016003628 A1
- WO 20170422209 A1